# EUROPÄISCHE PATENTSCHRIFT

(11) **EP 1 988 615 B1**
(45) Veröffentlichungstag und Bekanntmachung des Hinweises auf die Patenterteilung: **14.12.2011**
(21) Anmeldenummer: 08006188.0
(22) Anmeldetag: 28.03.2008
(51) Int. Cl.: H02G 3/18, H02G 3/08

(54) **Unterputz-Steckdose mit Leuchtmittelmodul**
Built-in plug socket with lighting module
Prise électrique encastrée dotée d'un module de moyen d'éclairage

(30) Priorität: 18.04.2007 DE 102007018178
(43) Veröffentlichungstag der Anmeldung: 05.11.2008
(73) Patentinhaber: ABB AG, 68309 Mannheim (DE)
(72) Erfinder: Ewers, Manfred, Dipl.-Ing., 58239 Schwerte (DE); Lerke, Richard, Dipl.-Ing., 58135 Hagen (DE); Sahlmann, Hans-Peter, 58454 Witten (DE)
(74) Vertreter: Miller, Toivo

(56) Entgegenhaltungen:
- EP-A1- 1 610 422
- DE-A1- 3 346 749
- DE-B3-102006 017 915
- DE-C1- 3 643 702

## Beschreibung

Die Erfindung bezieht sich auf eine Unterputz-Steckdose mit Leuchtmittelmodul und kann bei Unterputz-Schutzkontaktsteckdosen mit Orientierungsbeleuchtung und/oder Betriebsspannungsanzeige verwendet werden.

Aus der DE 33 46 749 C2 ist ein Unterputz-Installationsgerät mit einem Tragring bekannt, der zur Befestigung in einer Unterputz-Leerdose mit Spreizkrallen versehen ist, die vor der Montage durch an einem aus Kunststoff bestehenden Gehäuse an der Außenseite angeformte, elastische Haltemittel in Anlage an dem Gehäuse gehalten sind und die nach dem Einsetzen radial nach außen schwenkbar sind. Die Haltemittel sind als zwei Rasthaken ausgebildet, die jeweils einen der beiden Spreizfinger jeder Spreizkralle im Bereich der freien Enden der Spreizkrallen seitlich von außen umgreifen.

Aus der EP 0 905 844 A2 ist ein elektrisches Installationsgerät für den versenkten Einbau in einer Wandeinbaudose bekannt, welches mit selbsteinstellenden, als Federbügel ausgebildeten Haltemitteln versehen ist, die sich an der Innenfläche der Ausnehmung form- und kraftschlüssig anlegen und das Installationsgerät fixieren. Die Haltemittel sind am Installationsgerät geführt und mit diesem verrastet und bei Betätigung vom Installationsgerät lösbar.

Aus der DE 40 38 055 C1 ist eine Spreizkrallenbefestigung für elektrische Unterputz-Installationsgeräte bekannt, wobei die seitlichen Spreizkrallen vor dem Einbau durch Haltemittel in Anlage zu einem Sockel gehalten sind und die nach dem Einbau radial nach außen schwenkbar sind. Die Haltemittel sind senkrecht auf den seitlichen Sockelflächen angeordnete und sich gegenüberstehende Rippen und/oder Wandungen, die die Spreizkrallen an deren Längsseiten klemmen und beidseitig verdeckend am Sockel anlegen.

Der Erfindung liegt die Aufgabe zugrunde, eine Unterputz-Steckdose mit Leuchtmittelmodul anzugeben, bei welcher die für die Montage in einer Unterputzdose dienenden Spreizen mit einfachen Mitteln in einer "Ruheposition" fixiert werden, welche eine Anlage der Spreizen am Gerätesockel bewirkt.

Diese Aufgabe wird erfindungsgemäß gelöst durch eine Unterputz-Steckdose mit einem separaten Leuchtmittelmodul für eine Orientierungsbeleuchtung und/oder Betriebsspannungsanzeige, welches ein Leuchtmittelgehäuse aufweist, das an der Bodenseite eines Gerätesockels montiert ist und welches an zwei nicht benachbarten Seitenflächen jeweils zwei Federbeine aufweist, welche paarweise zwei am Gerätesockel schwenkbar befestigte Spreizen arretierend umfassen.

Die mit der Erfindung erzielbaren Vorteile bestehen insbesondere darin, dass die Spreizen vor der Montage der Steckdose auch ohne zusätzliche Haltemittel (z. B. Gummiring) zuverlässig in einer "Ruheposition" arretiert sind.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: eine perspektivische Ansicht eines Leuchtmittelmoduls für Orientierungsbeleuchtung,
- Fig. 2: eine perspektivische Ansicht eines Leuchtmittelmoduls für Betriebsspannungsanzeige,
- Fig. 3: eine Steckdose mit Orientierungsbeleuchtung in "Explosionsdarstellung",
- Fig. 4: eine perspektivische Ansicht einer Steckdose mit Orientierungsbeleuchtung,
- Fig. 5: eine perspektivische Ansicht einer Steckdose mit Betriebsspannungsanzeige,
- Fig. 6: die Verrastung / Kontaktierung zwischen Gerätesockel und Leuchtmittelmodul bei der Steckdose mit Betriebsspannungsanzeige in "Explosionsdarstellung".

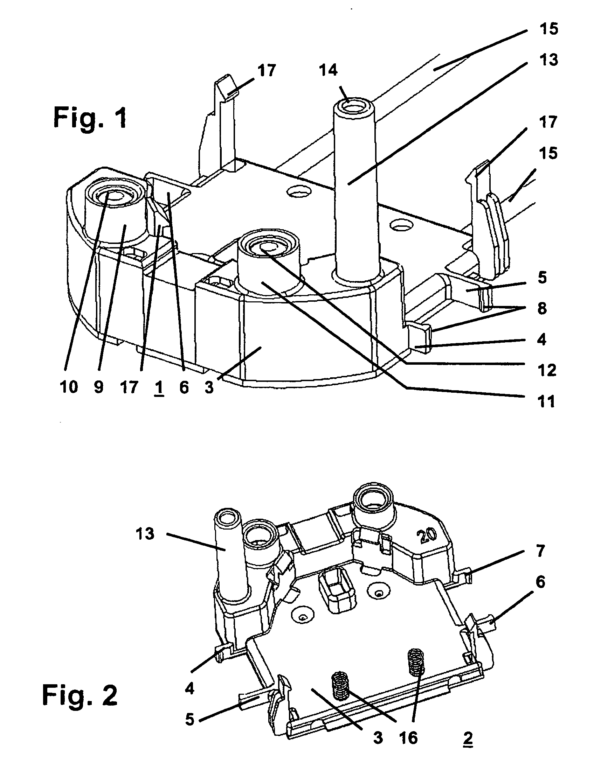

In Fig. 1 ist eine perspektivische Ansicht eines Leuchtmittelmoduls 1 für Orientierungsbeleuchtung dargestellt. Das Leuchtmittelmodul 1 weist ein Leuchtmitteigehäuse 3 auf, welches auf seiner Oberseite zwei Lichtaustrittsöffnungen 9, 11 mit Leuchtdioden 10, 12 und einen Dom 13 mit Lichtaustrittsöffnung 14 aufweist. Im Innenraum des Leuchtmittelgehäuses 3 befindet sich eine Elektronik (Netzteil) zur Versorgung der Leuchtdioden 10, 12. Für die Befestigung an der Bodenseite eines Gerätesockels ist das Leuchtmittelgehäuse 3 mit mehreren Clips 17 versehen, welche in korrespondierende Rastmittel des Gerätesockels eingreifen.

An zwei nicht benachbarten Seitenflächen des Leuchtmittelgehäuses 3 sind je zwei Federbeine zur Arretierung einer am Gerätesockel schwenkbar befestigten Spreize angeformt, und zwar umschließen jeweils zwei dieser Federbeine die Seitenkanten einer Spreize. Im Einzelnen sind Federbeine 4 und 5 zur Arretierung einer ersten Spreize sowie zwei Federbeine 6 und 7 (siehe auch Fig. 2) zur Arretierung einer zweiten Spreize vorhanden. Die Federbeine 4 - 7 sind mit zueinander weisenden, endseitigen Rastnasen 8 versehen.

In Fig. 2 ist eine perspektivische Ansicht eines Leuchtmittelmoduls 2 für Betriebsspannungsanzeige dargestellt. Auch diese Ausführungsform weist das Leuchtmittelgehäuse 3 mit den vier Federbeinen 4 - 7 auf, jedoch ist im Endbereich des Domes 13 eine Leuchtdiode angeordnet, während die Leuchtdioden 10, 12 entfallen. Im Innenraum des Leuchtmittelgehäuses 3 befindet sich ein Vorwiderstand zum Anschluss dieser Leuchtdiode. Im Unterschied zum Leuchtmittelmodul 1 für Orientierungsbeleuchtung besteht hier die Aufgabe, das Vorhandensein der Netzwechselspannung (Betriebsspannung) durch Aufleuchten der Leuchtdiode anzuzeigen.

Hinsichtlich der elektrischen Energieversorgung sind die Leuchtmittelmodule 1, 2 wie folgt unterschiedlich ausgestaltet:
- Die Energieversorgung beim Leuchtmittelmodul 1 für Orientierungsbeleuchtung erfolgt durch zwei eine Seitenfläche des Leuchtmittelgehäuses 3 durchstoßende Anschlussdrähte 15. Aufgrund der Energieversorgung über Anschlussdrähte 15 ist es vorteilhaft möglich, die Orientierungsbeleuchtung in gewünschter Weise unter Verwendung eines Schaltgerätes einzuschalten / auszuschalten.
- Die elektrische Kontaktierung beim Leuchtmittelmodul 2 für Betriebsspannungsanzeige erfolgt über auf der Oberseite des Leuchtmittelgehäuses 3 angeordnete Kontaktfedern 16, welche Anschlussklemmen des Gerätesockels unmittelbar elektrisch kontaktieren.

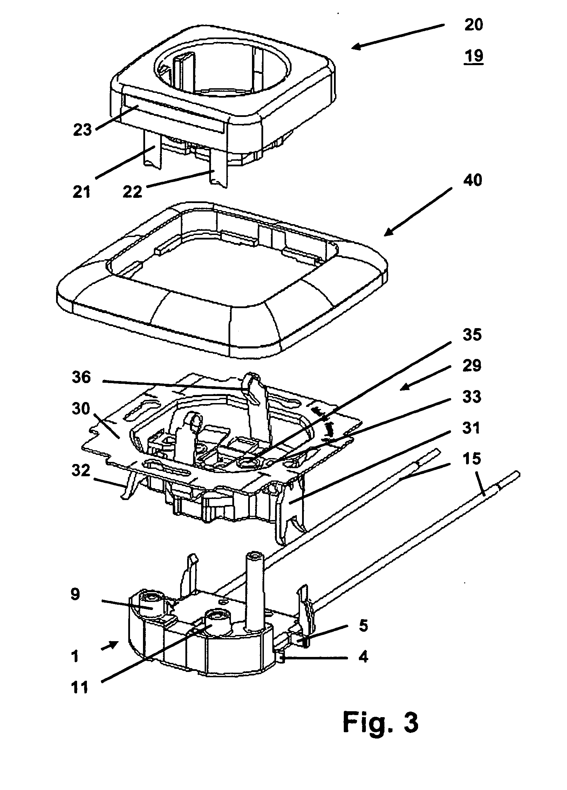

In Fig. 3 ist eine Steckdose 19 mit Orientierungsbeleuchtung in "Explosionsdarstellung" dargestellt. Die Steckdose 19 weist folgende Hauptkomponenten auf:
- eine Zentralscheibe 20 mit Steckdosentopf und U-förmigem Lichtleiter, wobei in Fig. 3 zwei Lichteintrittsdome 21, 22 und eine an einer Seitenkante der Zentralscheibe 20 angeordnete Lichtaustrittsfläche 23 dieses Lichtleiters zu erkennen sind,
- einen Gerätesockel 29 mit Tragring 30, zwei Spreizen 31, 32, Spreizen-Betätigungsschrauben 33, Polkontakten 35 und Erdungsbügel 36,
- ein Leuchtmittelmodul 1 für Orientierungsbeleuchtung mit Lichtaustrittsöffnungen 9, 11, Anschlussdrähten 15 und Federbeinen 4 - 7,
- einen Abdeckrahmen 40.

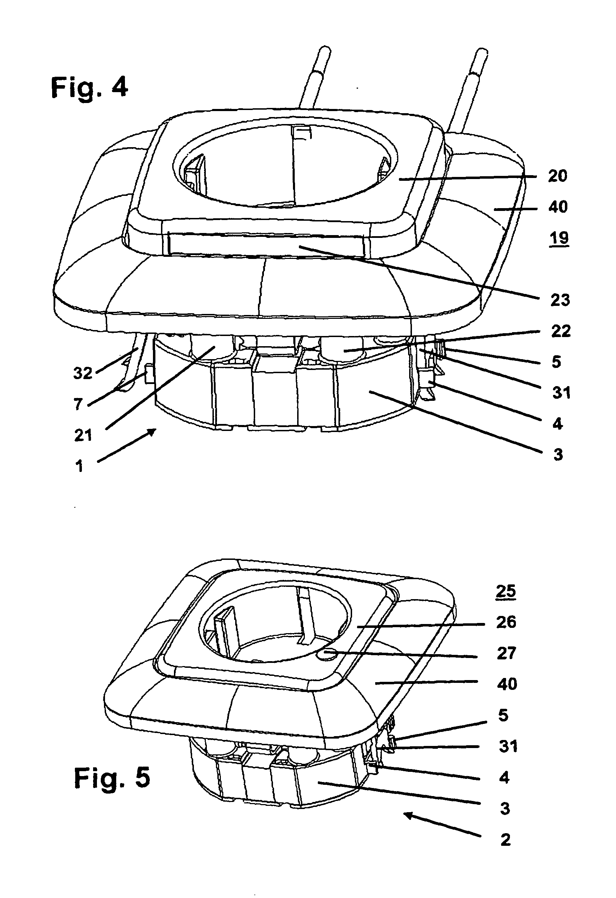

In Fig. 4 ist eine perspektivische Ansicht einer Steckdose 19 mit Orientierungsbeleuchtung dargestellt. Am Gerätesockel ist das Leuchtmittelgehäuse 3 eines Leuchtmittelmoduls 1 verrastet. Das im Leuchtmittelmodul 1 erzeugte Licht gelangt über die Lichtaustrittsöffnungen 9, 11 in die Lichteintrittsdome 21, 22 des Lichtleiters und wird über die an der Zentralscheibe 20 seitlich angeordnete Lichtaustrittsfläche 23 nach außen abgestrahlt. Die Unterkante der Lichtaustrittsfläche 23 schließt vorzugsweise mit dem Abdeckrahmen 40 ab. Es sind die beiden Spreizen 31, 32 zu erkennen, wobei beispielhaft gezeigt ist, dass die Spreize 31 von den beiden Federbeinen 4, 5 arretiert wird.

In Fig. 5 ist eine perspektivische Ansicht einer Steckdose 25 mit Betriebsspannungsanzeige dargestellt. Am Gerätesockel ist das Leuchtmittelgehäuse 3 eines Leuchtmittelmodul 2 verrastet. Bei dieser Ausführungsform ist eine Zentralscheibe 26 mit einer frontseitigen Lichtaustrittsöffnung (Kalotte) 27 für die Betriebsspannungsanzeige vorgesehen. Es ist die von den beiden Federbeinen 4, 5 arretierte Spreize 31 zu erkennen.

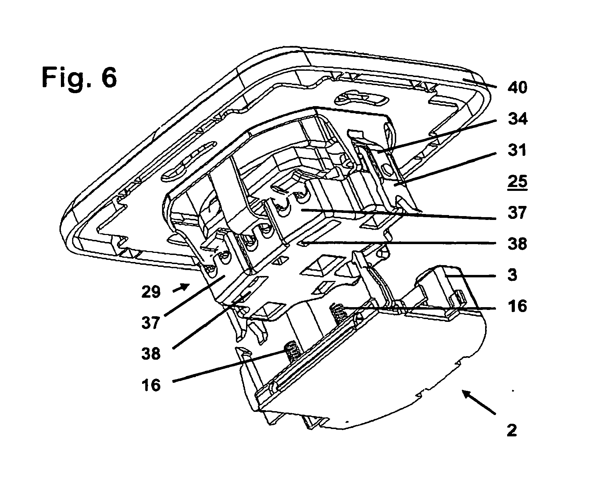

In Fig. 6 ist die Verrastung / Kontaktierung zwischen Gerätesockel 29 und Leuchtmittelgehäuse 3 des Leuchtmittelmoduls 2 bei der Steckdose 25 mit Betriebsspannungsanzeige in "Explosionsdarstellung" dargestellt. Am Gerätesockel 29 sind Anschlussklemmen 37 für die externe Verdrahtung (Phasenleiter, Nullleiter, Schutzleiter) zu erkennen. Unterhalb dieser Anschlussklemmen 37 befinden sich Kontaktierungsöffnungen 38 im Boden des Gerätesockels 29, in welche die Kontaktfedern 16 des Leuchtmittelmoduls 2 eintauchen können, um derart die elektrische Energieversorgung des zur Betriebsspannungsanzeige dienenden Leuchtmittels sicherzustellen. Fig. 6 zeigt ferner eine Spreizen-Rückstellfeder 34, welche die Spreize 31 in Richtung zum Gerätesockel 29 drückt, sobald die Spreizen-Betätigungsschraube 33 entsprechend in Richtung "Ruheposition" gedreht wird. Bei Betätigung der Spreizen-Betätigungsschrauben 33 in Richtung "Montageposition" schwenken die Spreizen mit ihren freien Enden (Krallen) nach außen, um derart gegen die Innenwand einer Unterputzdose zu pressen.

Vorteilhaft kann das Leuchtmittelgehäuse 3 universell Verwendung finden
A) für eine Steckdose 19 mit Orientierungsbeleuchtung (siehe Figuren 3 und 4), wobei relativ leistungsstarke Leuchtdioden 10 bzw. 12 Licht über die Lichtaustrittsöffnungen 9, 11 in die Lichteintrittsflächen der Lichteintrittsdome 21, 22 des Lichtleiters einstrahlen,
B) für eine Steckdose 25 mit Betriebsspannungsanzeige (siehe Figuren 5 und 6), wobei eine im endseitigen Bereich des Domes 13 angeordnete, relativ leistungsschwache Leuchtdiode Licht über eine Lichtaustrittsöffnung 14 zur Lichtaustrittsöffnung 27 abstrahlt,
C) für eine Steckdose mit Orientierungsbeleuchtung und Betriebsspannungsanzeige, wobei beide Maßnahmen A) und B) zur Anwendung gelangen.

### Bezugszeichenliste:

- 1: Leuchtmittelmodul für Orientierungsbeleuchtung
- 2: Leuchtmittelmodul für Betriebsspannungsanzeige
- 3: Leuchtmittelgehäuse
- 4: Federbein zur Arretierung einer ersten Spreize
- 5: Federbein zur Arretierung einer ersten Spreize
- 6: Federbein zur Arretierung einer zweiten Spreize
- 7: Federbein zur Arretierung einer zweiten Spreize
- 8: Rastnase eines Federbeins
- 9: Lichtaustrittsöffnung für Orientierungsbeleuchtung
- 10: Leuchtdiode
- 11: Lichtaustrittsöffnung für Orientierungsbeleuchtung
- 12: Leuchtdiode
- 13: Dom (mit Leuchtdiode im oberen Bereich)
- 14: Lichtaustrittsöffnung im Dom für Betriebsspannungsanzeige
- 15: Anschlussdrähte
- 16: Kontaktfedern
- 17: Clips zum Aufrasten auf Gerätesockel
- 18: ---
- 19: Steckdose mit Orientierungsbeleuchtung
- 20: Zentralscheibe für Orientierungsbeleuchtung
- 21: Lichteintrittsdom eines Lichtleiters
- 22: Lichteintrittsdom eines Lichtleiters
- 23: Basisschenkel eines Lichtleiters = Lichtaustrittsfläche für Orientierungsbeleuchtung
- 24: ---
- 25: Steckdose mit Betriebsspannungsanzeige
- 26: Zentralscheibe für Betriebsspannungsanzeige
- 27: Lichtaustrittsöffnung für Betriebsspannungsanzeige (Kalotte)
- 28: ---
- 29: Gerätesockel
- 30: Tragring
- 31: erste Spreize
- 32: zweite Spreize
- 33: Spreizen-Betätigungsschraube
- 34: Spreizen-Rückstellfeder
- 35: Polkontakte
- 36: Erdungsbügel
- 37: Anschlussklemmen
- 38: Kontaktierungsöffnungen
- 39: ---
- 40: Abdeckrahmen

## Patentansprüche

1. Unterputz-Steckdose mit einem separaten Leuchtmittelmodul (1, 2) für eine Orientierungsbeleuchtung und/oder Betriebsspannungsanzeige, welches ein Leuchtmittelgehäuse (3) aufweist, das an der Bodenseite eines Gerätesockels (29) montiert ist und welches an zwei nicht benachbarten Seitenflächen jeweils zwei Federbeine (4 - 7) aufweist, welche paarweise zwei am Gerätesockel (29) schwenkbar befestigte Spreizen (31, 32) arretierend umfassen.

2. Unterputz-Steckdose nach Anspruch 1, **dadurch gekennzeichnet, dass** jedes Federbein (4 - 7) endseitig eine Rastnase (9) zur Arretierung einer Spreize (31, 32) aufweist.

3. Unterputz-Steckdose nach Anspruch 1 oder 2, **dadurch gekennzeichnet, dass** das Leuchtmittelgehäuse (3) Clips (17) zum Aufrasten auf den Gerätesockel (29) aufweist.

4. Unterputz-Steckdose nach einem der vorstehenden Ansprüche, **dadurch gekennzeichnet, dass** Spreizen-Rückstellfedern (34) die Spreizen (31, 32) in einer Ruheposition in Richtung Gerätesockel (29) und zwischen zwei Federbeine (4 - 7) halten.

5. Unterputz-Steckdose nach einem der vorstehenden Ansprüche, **dadurch gekennzeichnet, dass** das Leuchtmittelgehäuse (3) an seiner Oberseite zwei Lichtaustrittsöffnungen (9, 11) aufweist, über die Leuchtdioden (10, 12) Licht in Lichteintrittsflächen eines zur Orientierungsbeleuchtung dienenden Lichtleiters einstrahlen.

6. Unterputz-Steckdose nach Anspruch 5, **dadurch gekennzeichnet, dass** das Leuchtmittelgehäuse (3) an seiner Oberseite einen Dom (13) mit einer Lichtaustrittsöffnung (14) für eine Betriebsspannungsanzeige aufweist.

## Claims

1. A flush socket, comprising a separate illuminant module (1, 2) for orientation illumination and/or operating voltage display, which module comprises an illuminant housing (3) which is mounted on the bottom side of a device base (29) and which comprises two suspension units each (4 to 7) on two non-adjacent side surfaces, which suspension units comprise two pairs of struts which are pivotably fastened in a locking manner to the device base (29).

2. A flush socket according to claim 1, **characterized in that** each suspension unit (4 to 7) comprises a latching nose (9) at the end side for locking a strut (31, 32).

3. A flush socket according to claim 1 or 2, **characterized in that** the illuminant housing (3) comprises clips (17) for locking onto the device base (29).

4. A flush socket according to one of the preceding claims, **characterized in that** spreader return springs (34) hold the struts (31, 32) in an idle position in the direction of the device base (29) and between two suspension units (4 to 7).

5. A flush socket according to one of the preceding claims, **characterized in that** the illuminant housing (3) comprises two light outlet openings (9, 11) on its upper side, by means of which the light-emitting diodes (10, 12) inject light into the light entrance areas of a light conductor used for orientation illumination.

6. A flush socket according to claim 5, **characterized in that** on its upper side the illuminant housing (3) comprises a dome (13) on its upper side with a light outlet opening (14) for an operating voltage display.

## Revendications

1. Prise électrique sous enduit avec un module de lampe (1, 2) séparé pour une veilleuse lumineuse et/ou un indicateur lumineux de tension de service, qui présente un boîtier de lampe (3) monté sur le côté de fond d'une embase d'appareil (29) et possédant sur chacune de deux faces latérales non voisines deux pattes de ressort (4-7) qui saisissent par paire deux bras écartables (31, 32) fixés de façon pivotante sur l'embase d'appareil (29) de façon à réaliser un blocage.

2. Prise électrique sous enduit selon la revendication 1, **caractérisée en ce que** chaque patte de ressort (4-7) présente à son extrémité un ergot d'engagement (9) pour bloquer un bras écartables (31, 32).

3. Prise électrique sous enduit selon la revendication 1 ou 2, **caractérisée en ce que** le boîtier de lampe (3) présente des clips (17) pour s'encliqueter sur l'embase d'appareil (29).

4. Prise électrique sous enduit selon l'une des revendications précédentes, **caractérisée en ce que** des ressorts de rappel des bras écartables (34) retiennent les bras écartables (31, 32) dans une position de repos en direction de l'embase d'appareil (29) et entre deux pattes de ressort (4-7).

5. Prise électrique sous enduit selon l'une des revendications précédentes, **caractérisée en ce que** le boîtier de lampe (3) présente sur sa face supérieure deux ouvertures de sortie de lumière (9, 11) par lesquelles des diodes électroluminescentes (10, 12) émettent de la lumière dans les surfaces d'entrée de lumière d'un guide d'ondes lumineuses servant de veilleuse.

6. Prise électrique sous enduit selon la revendication 5, **caractérisée en ce que** le boîtier de lampe (3) présente sur sa face supérieure un dôme (13) avec une ouverture de sortie de lumière (14) pour une indication de la tension de service.
